# EUROPÄISCHE PATENTANMELDUNG

(11) **EP 1 862 718 A1**
(43) Veröffentlichungstag der Anmeldung: **05.12.2007**
(21) Anmeldenummer: 07109445.2
(22) Anmeldetag: 01.06.2007
(51) Int. Cl.: F16L 37/098

(54) **Dichtendes Schnellelement**

(30) Priorität: 02.06.2006 FR 0652009
(71) Anmelder: MANN+HUMMEL GmbH, 71638 Ludwigsburg (DE)
(72) Erfinder: Foulboeuf, Gwenael, 53260 Entrammes (FR); Champion, Arnaud, 53000 Laval (FR); De Cara, Gerald, 53210 Soulgé sur Ouette (FR); Tremblay, Guy, 53000 Laval (FR)

(57) **Zusammenfassung**

Dichtende Schnellverbindung einer männlichen Leitung mit einer Einsteckmuffe, die mit einer ringförmigen Schräge ausgestattet ist, und andererseits eine Außenleitung mit einer Muffe. Diese Vorrichtung beinhaltet einen Schrumpfring (8), der unter Krafteinwirkung um die Muffe (4) eingefügt ist und mit mindestens einem elastisch montierten Verriegelungsstift (10) ausgestattet ist, der geeignet ist, sich zwischen einer ausgefahrenen Position, in der er in eine Umfangsöffnung (13) der Muffe (4) dringt und im Innenbereich dieser Muffe so hervorsteht, dass er mit der ringförmigen Schräge (5) der Einsteckmuffe (3) in Eingriff kommt, um die Verbindung der beiden Leitungen (1, 2) zu ermöglichen, und andererseits einer eingefahrenen Position oder Nicht-Verbindungsposition zu bewegen.

## Beschreibung

Gegenstand der vorliegenden Erfindung ist eine dichtende Schnellverbindung einer Innenleitung und einer Außenleitung. Die Innenleitung ist an ihrem Ende mit einer Einsteckmuffe versehen, die mit einer ringförmigen Schräge ausgestattet ist, die an ihrem Außenumfang einen Flansch bildet. Die Außenleitung ist ihrerseits an ihrem Ende mit einer Muffe versehen, die an ihrem Innenumfang mit einer Nut ausgestattet ist, in der eine ringförmige Dichtung angebracht ist, insbesondere eine O-Ring-Dichtung oder jede beliebige Form von Dichtung.

Es kommt häufig vor, dass diese Art von Leitungen, die in den unterschiedlichsten Bereichen der Industrie für den Transport von Fluiden sowohl bei positivem als auch negativem Druck Anwendung finden, sehr schnell dichtend verbunden und ebenfalls genauso schnell getrennt werden müssen. Derartige Leitungen können beispielsweise für den Transport von Luft in Motoren oder verschiedenen Maschinen (Resonatoren, Kompressoren, Luftleitungen, Luftdurchflussmesser, Luftfilter,...) verwendet werden oder auch als Wasser- oder Gasleitungen.

Bis jetzt wurde noch keine Vorrichtung vorgeschlagen, die sowohl einfach als auch preiswert ist, und die geeignet ist, derartige Arbeitsgänge zufriedenstellend durchzuführen.

Gegenstand der vorliegenden Erfindung ist es, diese Lücke zu füllen.

Zu diesem Zweck hat sie zum Gegenstand eine dichtende Schnellverbindung von zwei oben genannten Leitungsarten, dadurch gekennzeichnet, dass sie einen Schrumpfring beinhaltet, der unter Krafteinwirkung um die Muffe eingesetzt wird und mit mindestens einem elastisch montierten Verriegelungsstift versehen ist.

Gemäß der Erfindung ist der Verriegelungsstift geeignet, sich zwischen einer ausgefahrenen Position oder Verbindungsposition, in die er automatisch gefahren wird, wenn keine äußeren Zwänge auf ihn einwirken, und einer eingefahrenen Position oder Nicht-Verbindungsposition zu bewegen. In der Verbindungsposition dringt der Verriegelungsstift durch eine Umfangsöffnung der Muffe und steht im Innenbereich dieser Muffe so hervor, dass er mit der ringförmigen Schräge der Einsteckmuffe in Eingriff kommt, um so die Verbindung der beiden Leitungen zu ermöglichen. Zur Durchführung dieser Verbindung genügt es also, die Einsteckmuffe axial so zu verschieben, dass sie in die Muffe eingefügt wird: die ringförmige Schräge der Einsteckmuffe, die zur Muffe ausgerichtet ist, bewirkt das Einfahren des Verriegelungsstiftes in seine Nicht-Verbindungsposition, und dann seine elastische Rückstellung in die Verbindungsposition. Der Verriegelungsstift rastet hinter der ringförmigen Schräge der Einsteckmuffe so ein, dass die derart verbundenen Leitungen verriegelt werden.

Gemäß einer anderen Ausführungsform der Erfindung hat der Verriegelungsstift eine abgefaste Kante, damit er automatisch durch die Drehung des Schrumpfringes um die Muffe in die Nicht-Verbindungsposition fahren kann. Die abgefaste Kante gleitet entlang des Endes der der Muffe zugeordneten Umfangsöffnung und bewirkt das Einfahren des Verriegelungsstiftes in die Nicht-Verbindungsposition.

Die beiden vorab verbundenen Leitungen können somit durch die Drehung des Schrumpfringes und das axiale Verschieben sowohl der Einsteckmuffe als auch der Muffe getrennt werden, um sie voneinander zu entfernen. Es sei darauf hingewiesen, dass nach dieser Trennung eine Drehung in umgekehrte Richtung des Schrumpfringes um die Muffe den Verriegelungsstift automatisch in Verbindungsposition in die der Muffe zugeordnete Umfangsöffnung bringt. Diese Drehung kann manuell ausgeführt werden. Es kann ebenfalls in Erwägung gezogen werden, die Vorrichtung so auszustatten, dass diese Umkehr automatisch durchgeführt wird. Vorzugsweise wird ein Anschlag vorgesehen, um so die Drehbewegung des Schrumpfringes um die Muffe zwischen der Verbindungsposition und der Nicht-Verbindungsposition zu begrenzen.

Gemäß einer Ausgestaltung der Erfindung beinhaltet der Schrumpfring im Allgemeinen mindestens zwei und vorzugsweise drei Verriegelungsstifte, die auf einem Kreis gleichmäßig verteilt und jeweils einer Umfangsöffnung der Muffe zugeordnet sind. Mit mehreren Stiften kann nämlich die Verriegelung der beiden Leitungen zueinander verbessert werden, was die Dichtigkeit der so zustande gekommenen Verbindung garantiert. Gemäß einer weiteren Ausführungsform der Erfindung wird jeder Verriegelungsstift auf die Innenseite einer Umfangslasche des Schrumpfringes elastisch verformbar montiert.

Unter dem Begriff Innenleitung sind sämtliche Rohre zu verstehen, die im Verbindungsbereich mit einem anderern Rohr einen geringeren Außendurchmesser als das Gegenstück aufweist.

Unter dem Begriff Außenleitung sind sämtliche Rohre zu verstehen, die im Verbindungsbereich mit einem anderen Rohr einen größeren Außendurchmesser als das Gegenstück aufweist.

Die Merkmale der Verbindungsvorrichtung, die Gegenstand der Erfindung ist, werden detaillierter beschrieben unter Bezugnahme auf die nicht einschränkenden, beigefügten Zeichnungen, in denen:
- Abbildung 1 eine perspektivische Ansicht ist, die die Innenleitung sowie die Außenleitung mit dem Schrumpfring vor der Verbindung zeigt;
- Abbildung 2 eine Schnittansicht der Einsteckmuffe und der Muffe nach der Verbindung zeigt,
- die Abbildungen 3, 4, 5 und 6 perspektivische Ansichten der verschiedenen Verbindungs- und Trennungsphasen der beiden Leitungen zeigen.

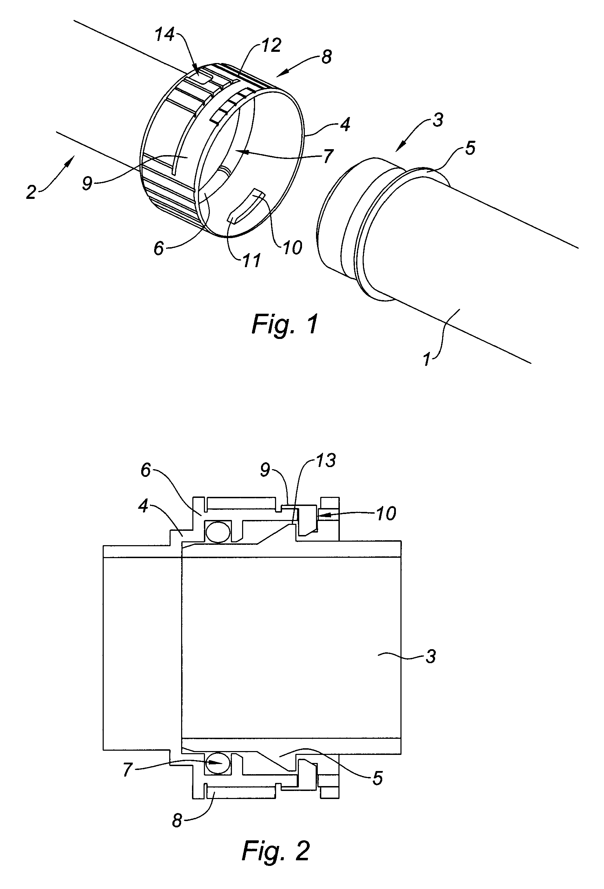

Gemäß Abbildung 1 ermöglicht die Erfindung, eine dichtende Schnellverbindung einer männlichen Leitung 1 und einer weiblichen Leitung 2 herzustellen. Gemäß den Abbildungen 1 und 2 ist die Innenleitung 1 mit einer Einsteckmuffe 3 ausgestattet, während die Außenleitung 2 mit einer Muffe 4 ausgestattet ist. Die Einsteckmuffe 3 ist an ihrem Außenumfang mit einer ringförmigen Schräge 5 ausgestattet, deren Neigung in Richtung ihres Endes ausgerichtet ist. Die Muffe 4 ist in ihrem Innenbereich mit einer unterbrochenen Nut 6 ausgestattet, in der eine O-Ring-Dichtung 7 eingefügt ist. Ein Schrumpfring 8 wird unter Krafteinwirkung um die Muffe 4 eingesetzt. Dieser Schrumpfring ist an seinem Umfang mit drei elastisch verformbaren Umfangslaschen 9 ausgestattet, die in regelmäßigen Abständen auf einem Ring verteilt sind und jeweils an ihrer Innenseite mit einem Verriegelungsstift 10 mit einer abgefasten Kante 11 ausgestattet sind. Jede dieser Laschen 9 hat im Wesentlichen die Form eines lang gebogenen Rechteckes und ist mit dem übrigen Teil des Schrumpfringes 8 nur durch eine ihrer kurzen Seiten 12 verbunden. Der Schrumpfring 8 ist geeignet, sich um die Muffe 4 zu drehen. Ein Anschlag 14 begrenzt die Drehbewegung. Jeder der Verriegelungsstifte 10 ist geeignet, sich zwischen einer ausgefahrenen Position oder Verbindungsposition, in die er automatisch gefahren wird, wenn keine äußeren Zwänge auf ihn einwirken, und einer eingefahrenen Position oder Nicht-Verbindungsposition zu bewegen.

In der in Abbildung 2 gezeigten Verbindungsposition dringt jeder der Verriegelungsstifte 10 in eine Umfangsöffnung 13, die der Muffe 4 zugeordnet ist und im Inneren dieses Verbindungsstückes hervorragt. In der Nicht-Verbindungsposition ist jeder der Verriegelungsstifte nach außen zurückgezogen.

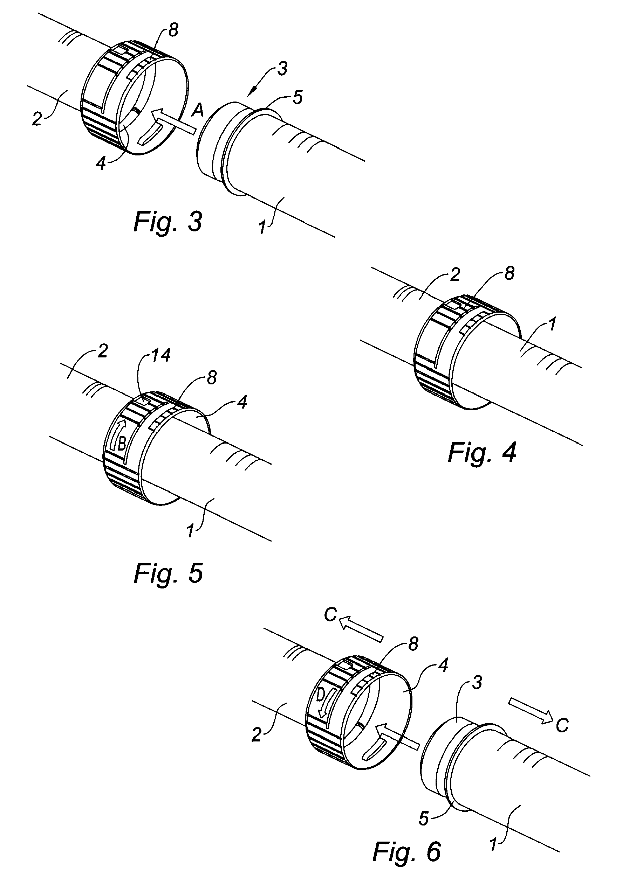

Gemäß Abbildung 3, die der Abbildung 1 für die Verbindung der männlichen Leitung 1 mit der weiblichen Leitung 2 entspricht, genügt es, die Einsteckmuffe 3 gemäß Pfeil A axial zu verschieben, um sie in den Innenbereich der Muffe 4 und des Schrumpfringes 8 einzuführen.

Während dieser Bewegung kommt die äußere Fläche der ringförmigen Schräge 5 der Einsteckmuffe 3 auf Anschlag gegen die Verriegelungsstifte 10, wobei sie die Verschiebung der Umfangslaschen 9 und somit das Einfahren der Verriegelungsstifte 10 bewirkt, und wegen der Dehnkraft dieser Laschen rasten die Verriegelungsstifte 10 gegen die hintere Fläche der ringförmigen Schräge 5 ein und ermöglichen somit die Verbindung der beiden Leitungen 1 und 2 in der in Abbildung 4 gezeigten Position.

Um die so verbundenen Leitungen 1 und 2 zu trennen, muss gemäß Abbildung 5 der Schrumpfring 8 um die Muffe 4 bis zum Anschlag 14 gedreht werden, wie durch den Pfeil B dargestellt. Während dieser Bewegung gleitet die abgefaste Kante 11 jedes Verriegelungsstiftes 10 entlang einer Kante der Umfangsöffnung 13, die der Muffe 4 zugeordnet ist, was eine elastische Verschiebung der Laschen 9 um ihre kurze Seite 12 bewirkt und in der Folge das Einfahren nach außen der Verriegelungsstifte 10, so dass die ringförmige Schräge 5 der Einsteckmuffe 3 herausgezogen wird. Gemäß Abbildung 6 können die Leitungen 1 und 2 jetzt getrennt werden, indem sie voneinander entfernt werden, wie dies durch die Pfeile C dargestellt wird. Eine Drehung des Schrumpfringes 8 um die Muffe 4 wie durch den Pfeil D dargestellt, der dem Pfeil B (Abbildung 5) gegenüber liegt, ermöglicht es, die Verriegelungsstifte 10 in eine Verbindungsposition zu bringen, so dass erneut eine Einsteckmuffe 3 in eine Muffe 4 und der Schrumpfring 8 eingeführt und blockiert werden können.

## Patentansprüche

1. Dichtende Schnellverbindung zweier Leitungen, und zwar einerseits eine Innenleitung mit einer Einsteckmuffe an ihrem Ende, die eine ringförmige Schräge an ihrem äußeren Teil hat und andererseits eine Außenleitung mit einer Muffe an ihrem Ende, die an ihrem Innenumfang mit einer Nut ausgestattet ist, in die eine ringförmige Dichtung eingefügt ist, insbesondere eine O-Ring-Dichtung oder jede beliebige Form von Dichtung, **dadurch gekennzeichnet, dass** ein Schrumpfring (8) unter Krafteinwirkung um die Muffe (4) eingefügt ist und mit mindestens einem elastisch montierten Verriegelungsstift (10) ausgestattet ist, der geeignet ist, sich einerseits zwischen einer ausgefahrenen Position oder Verbindungsposition zu bewegen, in die er automatisch zurückkehrt, wenn keine äußeren Zwänge auf ihn einwirken und in der er in eine Umfangsöffnung (13) der Muffe (4) dringt und im Innenbereich dieser Muffe so hervorsteht, dass er mit der ringförmigen Schräge (5) der Einsteckmuffe (3) in Eingriff kommt, um die Verbindung der beiden Leitungen (1, 2) zu ermöglichen, und andererseits einer eingefahrenen Position oder Nicht-Verbindungsposition zu bewegen.

2. Vorrichtung nach Anspruch 1, **dadurch gekennzeichnet, dass** der Verriegelungsstift (10) eine abgefaste Kante (11) hat, um so seinen automatischen Rückzug in die Nicht-Verriegelungsposition unter Einwirkung einer Drehung des Schrumpfringes (8) um die Muffe (4) zu ermöglichen.

3. Vorrichtung nach einem der Ansprüche 1 und 2, **dadurch gekennzeichnet, dass** der Schrumpfring (8) mindestens zwei und vorzugsweise drei Verriegelungsstifte (10) hat, die gleichmäßig auf einem Kreis verteilt und jeweils einer Umfangsöffnung (13) der Muffe (4) zugeordnet sind.

4. Vorrichtung nach einem der Ansprüche 1 bis 3, **dadurch gekennzeichnet, dass** der (die) Verriegelungsstift(e) (10) auf eine (die) Umfangslasche(n) (9) elastisch deformierbar montiert ist (sind).

5. Vorrichtung nach einem der Ansprüche 1 bis 4, **dadurch gekennzeichnet, dass** sie einen Anschlag (14) beinhaltet, der es ermöglicht, die Drehbewegung des Schrumpfringes (8) um die Muffe (4) zu begrenzen.
